# EUROPEAN PATENT APPLICATION

(11) **EP 4 708 004 A1**
(43) Date of publication of application: **11.03.2026**
(21) Application number: 24881297.6
(22) Date of filing: 12.09.2024
(51) Int. Cl.: G06F 3/0354

(54) **STYLUS TAIL MODULE, STYLUS, TOUCH CONTROL SYSTEM, AND STYLUS CONTROL METHOD**

(30) Priority: 26.10.2023 CN 202311406879
(71) Applicant: Huawei Technologies Co., Ltd., Shenzhen, Guangdong 518129 (CN)
(72) Inventor: CHAO, Hu, Shenzhen, Guangdong 518129 (CN); ZHOU, Yue, Shenzhen, Guangdong 518129 (CN); GAO, Zhijun, Shenzhen, Guangdong 518129 (CN); DENG, Shuang, Shenzhen, Guangdong 518129 (CN)
(74) Representative: Maiwald GmbH
(86) International application number: PCT/CN2024/118397
(87) International publication number: WO 2025/086931

(57) **Abstract**

A stylus tail module, a stylus, a touch system, and a method for controlling a stylus are provided. A stylus cap of the stylus tail module is configured to be fastened to a stylus barrel and is elastic. A first electrode and a second electrode of the stylus tail module are spaced apart from each other on the stylus cap. The two electrodes and the stylus cap form a stylus cap assembly. The first electrode is configured to be coupled to a contact object to generate an identification signal. When the contact object is a first contact object, the identification signal is a first identification signal for performing a first function, or when the contact object is a second contact object, the identification signal is a second identification signal for performing a second function. The first contact object and the second contact object are made of different materials. The first identification signal and the second identification signal are different. The second electrode is configured to transmit a coded signal. In this way, the stylus tail module can implement both a button function and an eraser function, and can determine, based on a contact object approaching the stylus cap, a function that currently needs to be performed. This can effectively avoid impact caused by tail wobbling.

## Description

This application claims priority to Chinese Patent Application No. 202311406879.5, filed with the China National Intellectual Property Administration on October 26, 2023 and entitled "STYLUS TAIL MODULE, STYLUS, TOUCH SYSTEM, AND METHOD FOR CONTROLLING STYLUS", which is incorporated herein by reference in its entirety.

### TECHNICAL FIELD

Embodiments of this application relate to the field of touch sensing technologies, and in particular, to a stylus tail module, a stylus, a touch system, and a method for controlling a stylus.

### BACKGROUND

A stylus is an electronic product that inputs information to an electronic device through a touchscreen, for example, but not limited to, a mobile phone or a tablet computer, to more conveniently and accurately perform operations such as writing and drawing on the mobile phone or the tablet computer. To improve user experience, in addition to inputting information to a wireless terminal through a stylus tip, the stylus is further provided with a button function and an eraser function at a stylus tail.

A typical stylus is provided with a physical button at a stylus tail, and a tail end of the physical button comes into contact with a touchscreen to implement an erasing function. However, the physical button achieves a pressing stroke based on a spring or a spring plate structure, and consequently, the tail end of the physical button is in a floating state. When an eraser function is performed through the tail end, tail wobbling can be clearly sensed, affecting user experience.

### SUMMARY

Embodiments of this application provide a stylus tail module, a stylus, a touch system, and a method for controlling a stylus, to avoid tail wobbling during an operation while integrating a button function and an eraser function.

A first aspect of embodiments of this application provides a stylus tail module, configured to adapt to a stylus barrel of a stylus, where the stylus tail module includes a stylus cap, a first electrode, and a second electrode; the stylus cap is configured to be fastened to the stylus barrel and is elastic, the first electrode and the second electrode are spaced apart from each other on the stylus cap, and the first electrode, the second electrode, and the stylus cap form a stylus cap assembly; the first electrode is configured to be coupled to a contact object to generate an identification signal; when the contact object is a first contact object, the identification signal is a first identification signal for performing a first function, or when the contact object is a second contact object, the identification signal is a second identification signal for performing a second function; the first contact object and the second contact object are made of different materials; and the first identification signal and the second identification signal are different; and the second electrode is configured to transmit a coded signal.

In this way, different identification signals may be generated by coupling the first electrode to contact objects made of different materials. When the contact object is the first contact object, the identification signal is a first identification signal for performing a button function, or when the contact object is the second contact object, the identification signal is a second identification signal for performing an eraser function. For example, the first function is the button function, and the second function is the eraser function. The stylus tail module can implement both the button function and the eraser function, and can determine, based on a contact object approaching the stylus cap, a function that currently needs to be performed.

In addition, based on a deformation capability provided by the elastic stylus cap, when a user performs the button function, deformation energy stored due to deformation under pressure is released through the stylus cap, and the stylus cap returning to the shape drives the electrode to reset. When the user presses the stylus cap against a touchscreen to perform an erasing operation, in one aspect, a tactile feedback similar to that of a conventional eraser can be obtained when a force of the erasing operation varies, forming a pressure-sensitive eraser that can completely avoid a wobbling sensation caused by a conventional physical button being used for performing an erasing function. As a result, the stylus tail module has both the button function and the eraser function, and can effectively avoid a possibility that tail wobbling occurs during an erasing operation.

In addition, when the user presses the stylus cap against the touchscreen to perform an erasing operation, the stylus cap can recover from deformation as a pressing action force is decreased. The stylus cap can maintain reliable contact with the touchscreen throughout the entire erasing operation, so that a continuous and stable erasing trace is displayed on an electronic device side in response to a user operation. This can improve overall user experience.

Besides, based on a structural characteristic of the elastic stylus cap, during a button operation, the stylus cap does not need to move as a whole relative to the stylus barrel, and a connection between the stylus cap and the stylus barrel may be configured as an adhesive-bonded and sealed connection or a gapless fit. As a result, when an operation is performed with a finger that sweats or is wet with water, compared with applying a conventional physical button solution, applying the solutions in this application can prevent moisture from entering an internal circuit, thereby ensuring operation reliability and further improving user experience.

In an actual application, the stylus cap may be made of an elastic material, for example, but not limited to, a rubber material or a TPU material, which can undergo moderate deformation and provide a restoring force when the user applies pressure during operation, to satisfy a corresponding operation function requirement.

Based on the first aspect, embodiments of this application further provide a first implementation of the first aspect: The stylus tail module further includes a pressure sensor and a stylus tail support, and the pressure sensor is fastened to the stylus tail support and is configured to detect pressure applied to a stylus tail. In this way, pressure from a user operation user is detected, and the button function or the eraser function is implemented according to an operation instruction. The button function and the eraser function share a pressure-sensing component, so that design space can be saved and costs can be properly controlled.

In an actual application, the pressure sensor may be directly fastened to the stylus tail support, or may be indirectly fastened to the stylus tail support through another component.

Based on the first implementation of the first aspect, embodiments of this application further provide a second implementation of the first aspect: The pressure sensor is integrated into the sensor FPC, the sensor FPC includes a first end and a second end, a first electrical connection portion of the first electrode and a second electrical connection portion of the second electrode each are electrically connected to an electrical connection port on the first end of the sensor FPC, the electrical connection port on the first end and the pressure sensor each are connected to the second end through a conducting wire in a substrate of the sensor FPC, and an electrical connection port on the second end of the sensor FPC is configured to electrically connect to a control unit of the stylus. As a result, the sensor FPC has functions of both the pressure sensor and a conducting wire, featuring high integration and excellent assembly processability.

For example, the electrical connection port on the first end may be exposed copper on a surface of the sensor FPC. Based on a relatively large contact area, the electrical connection portions of the two electrodes may be bonded to corresponding exposed copper on surfaces through conductive foam using an adhesive, to form a reliable electrical connection, and an electrical connection path is formed through the conducting wire in the substrate of the sensor FPC 6.

For another example, the electrical connection port on the first end may alternatively be a pad on the sensor FPC.

Based on the second implementation of the first aspect, embodiments of this application further provide a third implementation of the first aspect: The stylus tail module further includes a support member and a deformation bearing plate, the deformation bearing plate is fastened to the stylus tail support, the pressure sensor is located on the deformation bearing plate, the support member is located between the stylus cap assembly and the deformation bearing plate, and the support member abuts against the stylus cap assembly and the deformation bearing plate separately, to transmit pressure to the deformation bearing plate. In this case, an action force applied to the stylus tail may be sequentially transmitted through the stylus cap, the electrode assembly, and the support member to the deformation bearing plate. The pressure sensor on the deformation bearing plate may detect pressure from a user operation. In this way, the button function or the eraser function is implemented according to an operation instruction.

In an actual application, one of the stylus cap assembly and the support member is provided with a force-transmitting convex portion, the other of the stylus cap assembly and the support member is provided with a force-transmitting concave portion, and the force-transmitting convex portion is capable of being partially inserted into the force-transmitting concave portion and abutting against the force-transmitting concave portion.

Based on the third implementation of the first aspect, embodiments of this application further provide a fourth implementation of the first aspect: The force-transmitting convex portion is provided on the stylus cap assembly, and the first electrical connection portion of the first electrode and the second electrical connection portion of the second electrode are located on two sides of the force-transmitting convex portion respectively. Based on excellent physical insulation, electrical performance of the first electrode and the second electrode is improved.

Based on the third implementation of the first aspect or the fourth implementation of the first aspect, embodiments of this application further provide a fifth implementation of the first aspect: Two ends of the deformation bearing plate include a mounting portion formed through bending toward the stylus tail support, the stylus tail support is provided with a corresponding slot, and the mounting portion of the deformation bearing plate is inserted into and fastened to the slot of the stylus tail support. As a result, the mounting portion and the slot that are adapted to each other through insertion can provide assembly positioning, and then be fastened to each other through welding or adhesive bonding. In one aspect, assembly processability is excellent, and product assembly accuracy can be improved. In another aspect, a fixed contact area between the deformation bearing plate and the stylus tail support is increased. As a result, a fastening relationship is effectively strengthened.

Based on the third implementation of the first aspect, or the fourth implementation of the first aspect, or the fifth implementation of the first aspect, embodiments of this application further provide a sixth implementation of the first aspect: The support member includes an abutting portion that abuts against the deformation bearing plate, the abutting portion is provided with a metal adapter, and the metal adapter includes an abutting surface that faces a force-bearing surface of the deformation bearing plate, for abutting against the deformation bearing plate. As a result, based on configuration of the metal adapter, a bearing capacity of the support member can be improved. For the stylus tail module integrating the button function and the eraser function, stable use reliability is ensured in a scenario with a high operation frequency.

For example, the metal adapter and a body of the support member may be formed through an injection molding process. As an example but not limitation, the body of the support member may be formed through injection molding by using a PC material.

Based on the third implementation of the first aspect, or the fourth implementation of the first aspect, or the fifth implementation of the first aspect, embodiments of this application further provide a seventh implementation of the first aspect: The support member and the deformation bearing plate are integrally formed through processing. This provides characteristics of simple structure and excellent processability.

Based on the third implementation of the first aspect, or the fourth implementation of the first aspect, or the fifth implementation of the first aspect, or the sixth implementation of the first aspect, or the seventh implementation of the first aspect, embodiments of this application further provide an eighth implementation of the first aspect: The first end of the sensor FPC is bent to a side that is of the support member and that faces the first electrode and the second electrode, and the first electrical connection portion of the first electrode and the second electrical connection portion of the second electrode each are electrically connected to corresponding exposed copper on a surface of the first end of the sensor FPC through conductive foam. In this case, the sensor FPC is fully utilized to form a reliable electrical connection, so that integration of a product is high.

Based on the third implementation of the first aspect, or the fourth implementation of the first aspect, or the fifth implementation of the first aspect, or the sixth implementation of the first aspect, or the seventh implementation of the first aspect, or the eighth implementation of the first aspect, embodiments of this application further provide a ninth implementation of the first aspect: The stylus tail module further includes a limiting portion, where the limiting portion is capable of limiting a pressing stroke of the stylus cap assembly. As a result, as a pressing force at the stylus tail is gradually increased, the limiting portion can generate a reaction force, ensuring that the deformation bearing plate is not crushed and further protecting an operating state of the pressure sensor.

For example, the limiting portion is a fastened limiting baffle. Correspondingly, the support member includes a limiting surface. In a pressing direction of the stylus cap assembly, there is a spacing between the limiting surface of the support member and the limiting baffle, for limiting the pressing stroke of the stylus cap assembly. As the pressing force at the stylus tail is gradually increased, the spacing decreases accordingly until the limiting surface of the support member is pressed against the limiting baffle. The limiting surface being pressed against the limiting baffle can properly control a maximum displacement of the deformation bearing plate and ensure use reliability of the deformation bearing plate.

For another example, the stylus cap assembly may include a limiting surface corresponding to the limiting baffle. In a pressing direction of the stylus cap assembly, there is a spacing between the limiting surface of the stylus cap assembly and the limiting baffle, for limiting a pressing stroke of the stylus cap assembly.

For another example, the limiting portion is disposed in the middle of the stylus tail support. In a pressing direction of the stylus cap assembly, there is a spacing between the limiting portion and the deformation bearing plate, for limiting a pressing stroke of the stylus cap assembly; or there is a spacing between the limiting portion and the pressure sensor on the deformation bearing plate, for limiting a pressing stroke of the stylus cap assembly.

Based on the first aspect, or the first implementation of the first aspect, or the second implementation of the first aspect, or the third implementation of the first aspect, or the fourth implementation of the first aspect, or the fifth implementation of the first aspect, or the sixth implementation of the first aspect, or the seventh implementation of the first aspect, or the eighth implementation of the first aspect, or the ninth implementation of the first aspect, embodiments of this application further provide a tenth implementation of the first aspect: The first electrode and the second electrode are mounted on the electrode support, and the force-transmitting convex portion of the stylus cap assembly is formed on the electrode support.

In a specific implementation, a body of the first electrode and a body of the second electrode are located on a side that is of the electrode support and that faces the stylus cap, and both the first electrical connection portion of the first electrode and the second electrical connection portion of the second electrode extend out of the electrode support, to establish corresponding electrical connections respectively. This structure is simple and easy to implement.

For example, the first electrode, the second electrode, and the electrode support of the electrode assembly may be formed through an injection molding process, so that processability can be further improved and product accuracy can be properly controlled.

Based on the first aspect, or the first implementation of the first aspect, or the second implementation of the first aspect, or the third implementation of the first aspect, or the fourth implementation of the first aspect, or the fifth implementation of the first aspect, or the sixth implementation of the first aspect, or the seventh implementation of the first aspect, or the eighth implementation of the first aspect, or the ninth implementation of the first aspect, embodiments of this application further provide an eleventh implementation of the first aspect: The first electrode, the second electrode, and the stylus cap of the stylus cap assembly are formed through an injection molding process. In a specific implementation, the force-transmitting convex portion of the stylus cap assembly is formed on the first electrode or the second electrode. In this way, efficiency of transmitting a pressing force is relatively high.

Based on the first aspect, or the first implementation of the first aspect, or the second implementation of the first aspect, or the third implementation of the first aspect, or the fourth implementation of the first aspect, or the fifth implementation of the first aspect, or the sixth implementation of the first aspect, or the seventh implementation of the first aspect, or the eighth implementation of the first aspect, or the ninth implementation of the first aspect, or the tenth implementation of the first aspect, or the eleventh implementation of the first aspect, embodiments of this application further provide a twelfth implementation of the first aspect: In a plane perpendicular to a length direction of the stylus tail module, a projection of the body of the first electrode is circular, and a projection of the body of the second electrode is annular and is sleeved on an exterior of the body of the first electrode. In this way, the body of the first electrode is located on an inner side, and a relatively large electrode area may be configured, to ensure that a strong signal is obtained after the first electrode comes into contact with a contact object. The annular body of the second electrode is sleeved on the exterior of the body of the first electrode, so that coded signal communication across a full circumferential range without a dead angle can be implemented and therefore accuracy of identifying and determining a current erasing position can be improved.

In another actual application, in a plane perpendicular to a length direction of the stylus tail module, a projection of the body of the second electrode is circular, and a projection of the body of the first electrode is annular and is sleeved on an exterior of the body of the second electrode.

In another actual application, in a plane perpendicular to a length direction of the stylus tail module, a projection of the body of the second electrode is cross-shaped, and a projection of the body of the first electrode is annular and is sleeved on an exterior of the body of the second electrode.

In another actual application, in a plane perpendicular to a length direction of the stylus tail module, a projection of the body of the second electrode is cross-shaped, and a projection of the body of the first electrode is four arc segments that are circumferentially spaced apart from each other; and four outward-extending ends of the second electrode each are located between two adjacent arc segments of the body of the first electrode. Certainly, in another possible implementation, the projection of the body of the second electrode may alternatively be another quantity of outward-extending ends radiating from a center, and correspondingly, the projection of the body of the first electrode is another quantity of arc segments that are circumferentially spaced apart from each other; and the outward-extending ends each are located between two adjacent arc segments of the body of the first electrode.

Based on the first aspect, or the first implementation of the first aspect, or the second implementation of the first aspect, or the third implementation of the first aspect, or the fourth implementation of the first aspect, or the fifth implementation of the first aspect, or the sixth implementation of the first aspect, or the seventh implementation of the first aspect, or the eighth implementation of the first aspect, or the ninth implementation of the first aspect, or the tenth implementation of the first aspect, or the eleventh implementation of the first aspect, or the twelfth implementation of the first aspect, embodiments of this application further provide a thirteenth implementation of the first aspect: The stylus cap includes a pressing portion and a connection portion, the pressing portion is located in the middle of the stylus cap, the connection portion is located on a periphery of the stylus cap, and an outer peripheral surface of the connection portion is provided with an adhesive slot. In this case, when the stylus cap is bonded and fastened to an inner wall of the stylus barrel, an adhesive layer in adhesive accommodation space formed by the adhesive slot ensures a secure connection between the stylus cap and the stylus barrel.

In an actual application, the pressing portion of the stylus cap may have an outer cambered contour that protrudes outward, and correspondingly, the electrode assembly attached to an inner wall surface of the pressing portion also has an outer cambered contour that protrudes outward. Such a configuration allows the user to tilt a stylus body to perform a functional operation, thereby further improving user experience. During execution of the eraser function, user experience is more significantly improved.

A second aspect of embodiments of this application provides a stylus, where the stylus includes a stylus barrel and the foregoing stylus tail module, the stylus tail module is fastened at a tail of the stylus barrel, and the stylus cap of the stylus tail module is fastened to the stylus barrel.

For example, the stylus barrel may be of a hollow structure, and the stylus cap may be fastened to an inner wall of the stylus barrel through an adhesive bonding process.

A third aspect of embodiments of this application provides a touch system, including an electronic device with a touchscreen, and a stylus adapted to the electronic device, where the stylus is the foregoing stylus.

A fourth aspect of embodiments of this application provides a method for controlling a stylus, where the stylus includes the foregoing stylus tail module, and the method for controlling the stylus includes the following steps: obtaining an identification signal generated by coupling the first electrode to a contact object; and performing a first function when the identification signal is a first identification signal, or performing a second function when the identification signal is a second identification signal. Different identification signals may be generated by coupling the first electrode to contact objects made of different materials. For example, the first function is a button function, and the second function is an eraser function. A function that currently needs to be performed can be determined based on a finger or a touchscreen approaching the stylus cap.

Based on the fourth aspect, embodiments of this application further provide a first implementation of the fourth aspect: Performing the first function includes: obtaining first pressure data collected by the pressure sensor, and outputting, based on the first pressure data, a first control signal for performing the first function. For example, a button event is output, where the first control signal is used for the electronic device to perform the button function; and when the pressure data does not reach a button operation threshold, the button event is released.

Based on the fourth aspect or the first implementation of the fourth aspect, embodiments of this application further provide a second implementation of the fourth aspect: Performing the second function includes: outputting a coded signal through the second electrode, obtaining second pressure data collected by the pressure sensor, and outputting, based on the second pressure data, a second control signal for performing the second function. For example, an eraser event is output, where the second control signal is used for the electronic device to perform the eraser function; and when the pressure data does not reach an eraser operation threshold, the eraser event is released.

In an actual application, the second control signal for performing the second function is output on a condition that the pressure data is greater than a second function triggering threshold. When the stylus tail comes into contact with or approaches the touchscreen, the eraser function can be enabled only by applying a great force for erasing, and remains disabled in other scenarios, thereby reducing power consumption of a product.

Based on the fourth aspect, or the first implementation of the fourth aspect, or the second implementation of the fourth aspect, embodiments of this application further provide a third implementation of the fourth aspect: before the identification signal generated by coupling the first electrode to the contact object is obtained, the pressure sensor collects third pressure data; and if the third pressure data satisfies a preset condition, the step of obtaining the identification signal generated by coupling the first electrode to the contact object is performed. In other words, the identification signal generated by coupling the first electrode to the contact object is obtained on a condition that the pressure sensor collects pressure data. A function of the stylus tail module is enabled on a condition that a pressing force is applied to the stylus tail and a corresponding identification signal is generated through coupling to the contact object. This can avoid triggering the first function or the second function by mistake.

### BRIEF DESCRIPTION OF DRAWINGS

FIG. 1 is a diagram of overall composition of a touch system according to an embodiment of this application;
FIG. 2 is a diagram of an assembly relationship of a stylus tail module according to an embodiment of this application;
FIG. 3 is an exploded view of assembly of the stylus tail module shown in FIG. 2;
FIG. 4 is a diagram of a use state of the stylus tail module shown in FIG. 2;
FIG. 5 is a diagram of another use state of the stylus tail module shown in FIG. 2;
FIG. 6 is a diagram of still another use state of the stylus tail module shown in FIG. 2;
FIG. 7 is a diagram of an assembly relationship of an electrode assembly shown in FIG. 3;
FIG. 8 is a diagram of an assembly relationship of the stylus tail module shown in FIG. 3;
FIG. 9 is a diagram of an assembly relationship, from another angle, between conductive foam and a sensor FPC that are shown in FIG. 8;
FIG. 10 is a diagram of a bending assembly relationship of a sensor FPC shown in FIG. 3;
FIG. 11 is a diagram of a flat state of the sensor FPC shown in FIG. 9;
FIG. 12 is an A-A sectional view of the stylus tail module shown in FIG. 3;
FIG. 13 is a diagram of another use state of the stylus tail module shown in FIG. 3;
FIG. 14A is a simplified diagram of a position relationship between a limiting baffle, a support member, and a deformation bearing plate that are shown in FIG. 3;
FIG. 14B is a simplified diagram of a position relationship in which a support member is pressed against a limiting baffle as shown in FIG. 3;
FIG. 15A is a simplified diagram of a position relationship of another limiting baffle in an initial state according to an embodiment of this application;
FIG. 15B is a simplified diagram of a position relationship in which a stylus cap is pressed against the limiting baffle as shown in FIG. 15A;
FIG. 16A is a simplified diagram of a position relationship of still another limiting baffle in an initial state according to an embodiment of this application;
FIG. 16B is a simplified diagram of a position relationship in which a deformation bearing plate is pressed against the limiting baffle as shown in FIG. 16A;
FIG. 17 is a diagram of an assembly relationship of another stylus tail module according to an embodiment of this application;
FIG. 18 is a diagram of overall composition of still another stylus tail module according to an embodiment of this application;
FIG. 19 is a diagram of an assembly relationship of the stylus tail module shown in FIG. 18;
FIG. 20 is a B-B sectional view of the stylus tail module shown in FIG. 18;
FIG. 21 is a diagram of an assembly relationship between a deformation bearing plate and a stylus tail support that are shown in FIG. 18;
FIG. 22 is a diagram of an assembly relationship between a support member and a sensor FPC that are shown in FIG. 18;
FIG. 23 is a diagram of a bending assembly relationship of a sensor FPC shown in FIG. 18;
FIG. 24 is a diagram of an assembly relationship of a stylus cap assembly shown in FIG. 18;
FIG. 25A is a projection view of a first electrode and a second electrode according to an embodiment of this application;
FIG. 25B is a projection view of another first electrode and another second electrode according to an embodiment of this application;
FIG. 25C is a projection view of still another first electrode and still another second electrode according to an embodiment of this application;
FIG. 25D is a projection view of yet another first electrode and yet another second electrode according to an embodiment of this application; and
FIG. 26 is a block flowchart of a method for controlling a stylus according to an embodiment of this application.

### DESCRIPTION OF EMBODIMENTS

Embodiments of this application provide a solution for implementing a stylus tail module integrating a button function and an eraser function, to effectively avoid impact caused by tail wobbling.

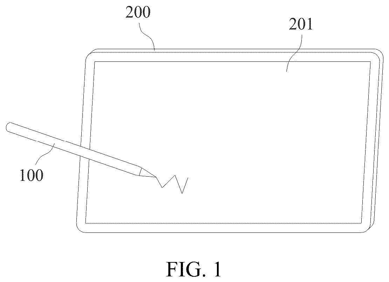

Generally, a stylus is used as an input device for an electronic device, to perform operations such as writing and drawing on a touchscreen of the electronic device. FIG. 1 is a diagram of overall composition of a touch system according to an embodiment of this application. The touch system includes a stylus 100 and an electronic device 200. For ease of description, an example in which the electronic device 200 is a tablet computer is used for illustration in FIG. 1.

The stylus 100 may provide an input for the electronic device 200, and the electronic device 200 may perform a corresponding operation function based on the input of the stylus 100. An electrode may be disposed in a stylus tip of the stylus 100, and a coded signal is transmitted through the electrode. A touchscreen 201 of the electronic device 200 that interacts with the stylus 100 may be integrated with an electrode array, namely, a capacitive electrode array adapted to an electrode on a stylus side. The electronic device 200 receives a coded signal from the stylus 100 through the electrode array, and identifies, based on a change in a capacitance value on the touchscreen 201, a position of the stylus tip of the stylus 100 on the touchscreen 201, to implement operation functions such as writing and drawing.

In a specific implementation, the stylus 100 and the electronic device 200 may be interconnected through a wireless communication network, to implement exchange of wireless signals. The communication network may be, but is not limited to, a short-range communication network such as a Wi-Fi hotspot network, a Wi-Fi peer-to-peer (peer-to-peer, P2P) network, a Bluetooth network, a ZigBee network, or a near field communication (near field communication, NFC) network. This is not limited in embodiments of this application.

A typical stylus is provided with a physical button at a stylus tail, and performs information exchange with the electronic device 200 via a button function. In addition, a tail end of the physical button comes into contact with the touchscreen to implement an erasing function. However, due to a structural characteristic of the physical button having a pressing stroke, the tail end of the physical button is in a floating state. When an eraser function is performed through the tail end, tail wobbling can be sensed, affecting user experience.

In view of this, an embodiment of this application provides a stylus tail module, configured to adapt to a stylus barrel of a stylus. The stylus tail module includes an elastic stylus cap, a first electrode, and a second electrode. The stylus cap is configured to connect to the stylus barrel. The first electrode and the second electrode are spaced apart from each other on the stylus cap. The first electrode is configured to be coupled to a contact object to generate an identification signal. When the contact object is a first contact object, the identification signal is a first identification signal for performing a first function, or when the contact object is a second contact object, the identification signal is a second identification signal for performing a second function. The first contact object and the second contact object are made of different materials. The first identification signal and the second identification signal are different, enabling identification and determining of a function that needs to be performed when a user performs an operation on the stylus tail module. The second electrode is configured to transmit a coded signal.

Herein, the elastic stylus cap may be made of an elastic material, for example, but not limited to, a rubber material or a TPU (Thermoplastic Urethane, thermoplastic polyurethane elastomer) material, which can undergo moderate deformation and provide a restoring force when the user applies pressure during operation, to satisfy a corresponding operation function requirement. The first function may be a button function, and the second function may be an eraser function, a marker function, or a function related to a drawing application. This is not limited in embodiments of this application. For example, the first function is a button function, and the second function is an eraser function. The user presses the stylus cap with a finger to satisfy a pressing stroke requirement of the button function, and the stylus cap returns to an original shape when the finger is released. For another example, the user obtains tactile feedback for a change in pressure when the user presses the stylus cap against a touchscreen to implement the eraser function, and the stylus cap recovers from deformation when a pressing action force is decreased, to maintain reliable contact with the touchscreen during an erasing operation.

In this way, different identification signals may be generated by coupling the first electrode to contact objects made of different materials. When the contact object is the first contact object, the identification signal is a first identification signal for performing the button function, or when the contact object is the second contact object, the identification signal is a second identification signal for performing the eraser function. In other words, the stylus tail module can implement both the button function and the eraser function, and can determine, based on a contact object approaching the stylus cap, a function that currently needs to be performed. In addition, based on a deformation capability provided by the elastic stylus cap, when the user performs the button function, deformation energy stored due to deformation under pressure is released through the stylus cap, and the stylus cap returning to the shape drives the electrode to reset. When the user presses the stylus cap against the touchscreen to perform the erasing operation, in one aspect, a tactile feedback similar to that of a conventional eraser can be obtained when a force of the erasing operation varies, forming a pressure-sensitive eraser that can completely avoid a wobbling sensation caused by a conventional physical button being used for performing an erasing function; and in another aspect, the stylus cap can recover from deformation as the pressing action force is decreased, and the stylus cap can maintain reliable contact with the touchscreen throughout the entire erasing operation, so that a continuous and stable erasing trace is displayed on an electronic device side in response to a user operation. This can improve overall user experience.

Besides, based on a structural characteristic of the elastic stylus cap, during a button operation, the stylus cap does not need to move as a whole relative to the stylus barrel, and a connection between the stylus cap and the stylus barrel may be configured as an adhesive-bonded and sealed connection or a gapless fit. As a result, when an operation is performed with a finger that sweats or is wet with water, compared with applying a conventional physical button solution, applying the solutions in this application can prevent moisture from entering an internal circuit, thereby ensuring operation reliability and further improving user experience.

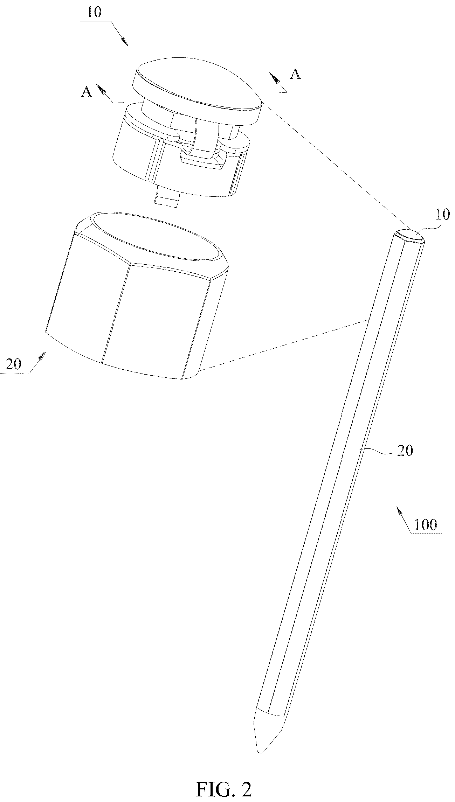

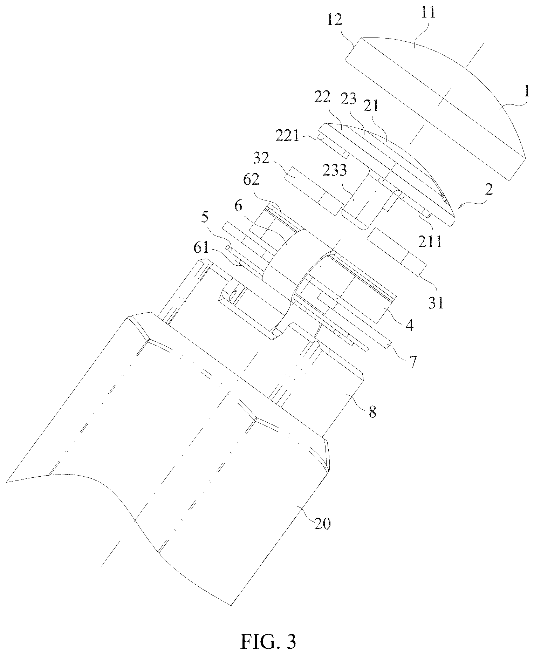

To better understand the technical solutions and technical effects of this application, without loss of generality, the following describes specific embodiments in detail with reference to the accompanying drawings, and uses the button function and the eraser function as a basis for describing functions of the stylus tail module. Refer to FIG. 2 and FIG. 3. FIG. 2 is a diagram of an assembly relationship of a stylus tail module according to an embodiment of this application. FIG. 3 is an exploded view of assembly of the stylus tail module shown in FIG. 2.

As shown in FIG. 2, a stylus tail module 10 of the stylus 100 is located at a tail end of a stylus barrel 20. In this implementation, the stylus barrel 20 is of a hollow structure, and main compositions of the stylus tail module 10 are built in the stylus barrel 20. After assembly is completed, an elastic stylus cap 1 is fastened to the stylus barrel 20, with a surface exposed outside the stylus barrel 20, to implement a button function and an eraser function. As a result, overall appearance is good.

As shown in FIG. 3, the stylus tail module 10 includes the stylus cap 1, an electrode assembly 2, a sensor FPC (Flexible Printed Circuit, flexible printed circuit) 6, and a stylus tail support 8. The electrode assembly 2 is fastened to the stylus cap 1. The sensor FPC 6 is configured with a pressure sensor 61. The pressure sensor 61 is fastened to the stylus tail support 8.

In this implementation, the electrode assembly 2 includes a first electrode 21 and a second electrode 22. Surfaces that are of the first electrode 21 and the second electrode 22 and that face a pressing portion of the stylus cap 1 each are attached to an inner wall surface of the pressing portion 11, to ensure good interaction and response capabilities in an operating state. Herein, the stylus cap 1 includes the pressing portion 11 and a connection portion 12. The connection portion 12 is located on a periphery of the stylus cap 1, and is configured to be bonded and fastened to an inner wall of the stylus barrel 20. The pressing portion 11 is located on an inner side of the connection portion 12, to apply a pressing force to a stylus tail, for example, but not limited to, a pressing force for implementing the button function and the eraser function. A material whose Rockwell hardness is greater than 60A and less than 90A may be selected as a material of the stylus cap 1, to meet requirements of both the button function and the eraser function.

The first electrode 21 is configured to be coupled to a contact object to generate an identification signal. In other words, the first electrode 21 is a capacitive signal detection electrode. The second electrode 22 is configured to transmit a coded signal. In other words, the second electrode 22 is a coded communication electrode.

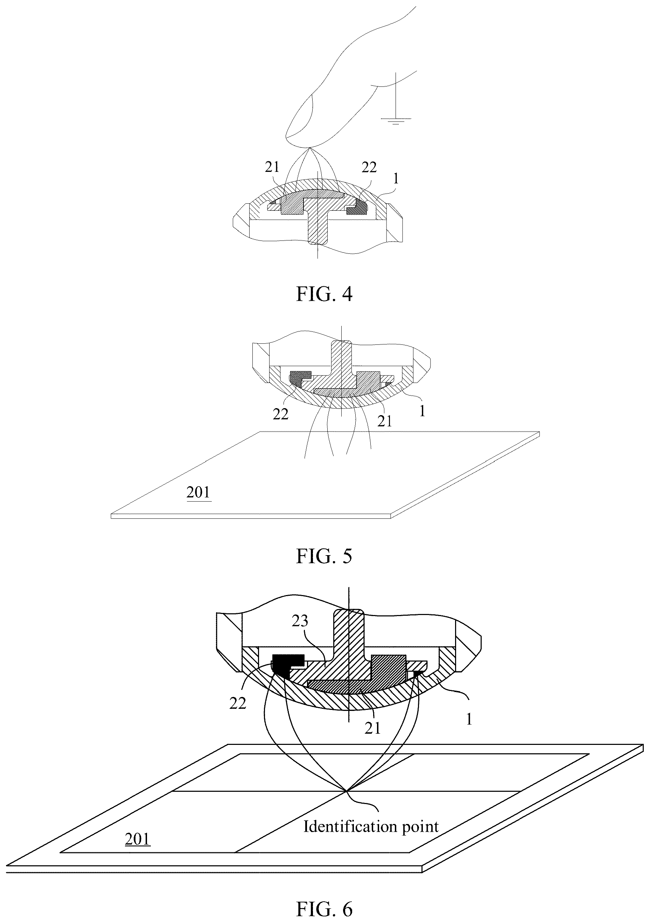

When the contact object is a first contact object, the identification signal is a first identification signal for performing the button function. Herein, the "first contact object" may be a finger of a user. As shown in FIG. 4, when a finger approaches or comes into contact with the first electrode 21, the finger that performs an operation acts as another plate of a capacitor. Based on a physical property of the finger, the finger and the first electrode 21 are coupled to each other, to form a first capacitor and generate a first capacitance value. In this case, an operation may be performed on the stylus tail module 10 based on the specific elastic stylus cap 1, to perform the button function. After the finger presses the stylus cap, a generated instruction signal is transmitted to an electronic device 200 side, and the electronic device may perform a button function based on a specific function setting. For example, in a reading interface, when a button is pressed once, the electronic device goes to a next page; and when the button is pressed twice consecutively, the electronic device goes to a previous page. It should be understood that a button function setting may be determined according to an overall design requirement of a product. This is not limited in embodiments of this application.

When the contact object is a second contact object, the identification signal is a second identification signal for performing the eraser function. Herein, the "second contact object" may be the touchscreen 201 of the electronic device. As shown in FIG. 5, when a tail end of the stylus tail module 10 approaches or comes into contact with the touchscreen 201, based on a physical property of a material of the touchscreen 201, the tail end of the stylus tail module 10 and the touchscreen 201 are coupled to each other, to form a second capacitor and generate a second capacitance value. In this case, an operation is performed on the stylus tail module 10 to perform the eraser function. As the user controls the stylus 100 to move relative to the touchscreen 201, as shown in FIG. 6, the electronic device 200 side may receive the coded signal transmitted by the second electrode 22, and the electronic device 200 may identify and determine a current erasing position based on the coded signal transmitted by the second electrode 22 and a change in a capacitance value on the touchscreen 201, to form a corresponding erasing trace. Meanwhile, a pressure signal generated due to a change in a force applied by the user may be synchronously transmitted to the electronic device 200 side, and erasing effect, for example, but not limited to, a width of the erasing trace or transparency of the erasing trace, may be adjusted based on a change in the pressure signal.

In a possible implementation, the "first contact object" may alternatively be another object whose material is different from that of the second contact object, for example, but not limited to, an adhesive bandage covering a finger of the user, where the finger covered with the adhesive bandage presses the stylus cap to implement the button function; or a desktop, where the stylus tail is pressed toward the desktop to implement the button function. In other words, the "first contact object" may be any object, provided that the "first contact object" is made of a material different from that of the touchscreen 201 and can be coupled to the first electrode 21 to generate different capacitance values.

Similarly, in another possible implementation, the "second contact object" may alternatively be another object whose material is different from that of the first contact object, for example, but not limited to, a touchpad that is communicatively connected to the electronic device 200, which can also implement determining of a function of the stylus tail module 10.

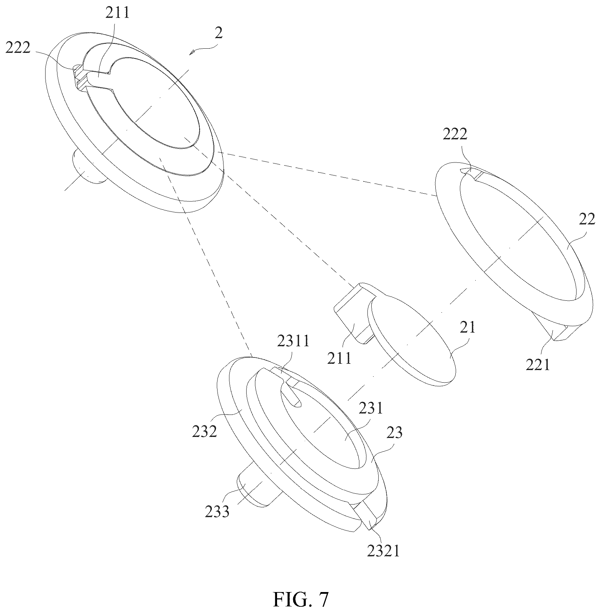

FIG. 7 is a diagram of an assembly relationship of the electrode assembly shown in FIG. 3.

As shown in FIG. 3 and FIG. 7, the first electrode 21 and the second electrode 22 may be separately assembled on an electrode support 23, to form the electrode assembly 2. A body of the first electrode 21 is circular, and the first electrode 21 is provided with a first electrical connection portion 211 extending toward the stylus barrel. A body of the second electrode 22 is annular, and the second electrode 22 is provided with a second electrical connection portion 221 extending toward the stylus barrel. The body of the second electrode 22 is sleeved on an exterior of the body of the second electrode 22. In another specific implementation, a shape of the body of the first electrode 21 and a shape of the body of the second electrode 22 are not limited to those shown in the figures. This is not limited in embodiments of this application.

Correspondingly, a surface that is of the electrode support 23 and that faces the stylus cap 1 is provided with a first recessed portion 231 and a second recessed portion 232. The first recessed portion 231 is located in the middle, the first recessed portion 231 is provided with a first through hole 2311 that goes through a body of the electrode support 23, and the body of the first electrode 21 is embedded in the first recessed portion 231. The second recessed portion 232 is located on an outer ring of the first recessed portion 231, the second recessed portion 232 is provided with a second through hole 2321 that goes through the body of the electrode support 23, and the body of the second electrode 22 is embedded in the second recessed portion 232. After assembly is completed, the first electrical connection portion 211 of the first electrode 21 extends out of the first through hole 2311, and the second electrical connection portion 221 of the second electrode 22 extends out of the second through hole 2321. In other words, the electrical connection portions of the two electrodes both extend out of the electrode support 23, to implement electrical connections to the electrical connection portions of the two electrodes respectively.

In a specific implementation, after the electrode assembly 2 is assembled as a whole, the electrode assembly 2 may be further fastened to the stylus cap 1 to form a stylus cap assembly, and then overall assembly is performed. As an example but not limitation, the electrode assembly 2 and the stylus cap 1 may be pre-installed and fastened to each other through an adhesive bonding process. In addition, the stylus cap assembly is provided with a force-transmitting convex portion 233 for assembly with and adaptation to a support member side, and the force-transmitting convex portion 233 is provided on a side that is of the electrode support 23 and that is away from the stylus cap 1.

In this implementation, the pressing portion 11 of the stylus cap 1 has an outer cambered contour that protrudes outward, and correspondingly, the electrode assembly 2 attached to the inner wall surface of the pressing portion 11 also has an outer cambered contour that protrudes outward. Such a configuration allows the user to tilt a stylus body to perform a functional operation, thereby further improving user experience. In particular, during execution of the eraser function, user experience is more significantly improved.

To improve electrical performance of the first electrode 21 and the second electrode 22, optionally, the first electrical connection portion 211 and the second electrical connection portion 221 are spaced apart from each other. For example, the first electrical connection portion 211 and the second electrical connection portion 221 shown in the figures are disposed on two sides of the force-transmitting convex portion 233 respectively. Further, optionally, the first electrical connection portion 211 may be located at an outer edge of the first electrode 21, to increase a distance between the first electrical connection portion 211 and the second electrical connection portion 221. On this basis, an avoidance notch 222 may be correspondingly provided on an inner edge of the body of the second electrode 22, to ensure physical insulation between the second electrode 22 and the first electrical connection portion 211 and therefore meet electrical performance requirements of the two electrodes.

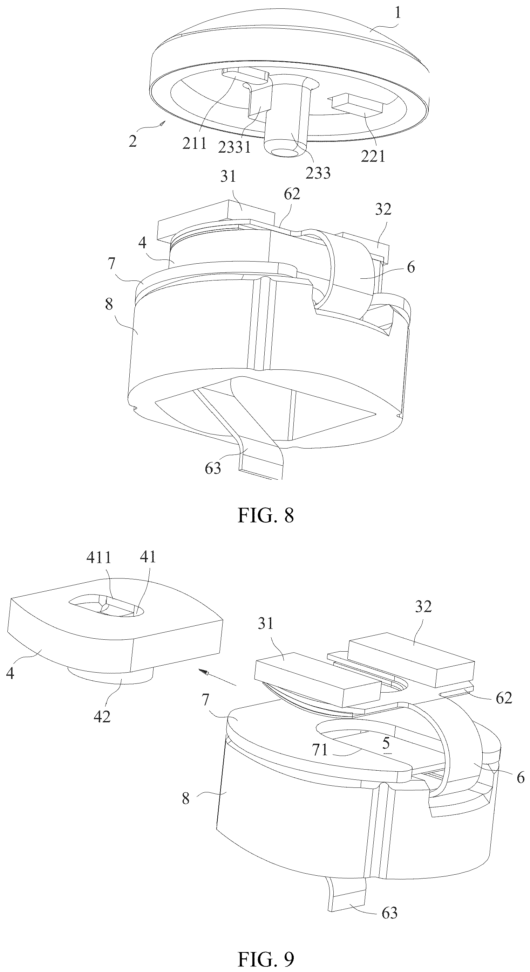

In addition, the first electrical connection portion 211 and the second electrical connection portion 221 may be electrically connected to the sensor FPC 6 through conductive foam, to achieve a reliable electrical connection. Refer to FIG. 3, FIG. 8, and FIG. 9 together. FIG. 8 is a diagram of an assembly relationship of the stylus tail module shown in FIG. 3. FIG. 9 is a diagram of an assembly relationship, from another angle, between the conductive foam and the sensor FPC that are shown in FIG. 8.

As shown in FIG. 8 and FIG. 9, the sensor FPC 6 has functions of both the pressure sensor 61 and a conducting wire, featuring high integration and excellent assembly processability.

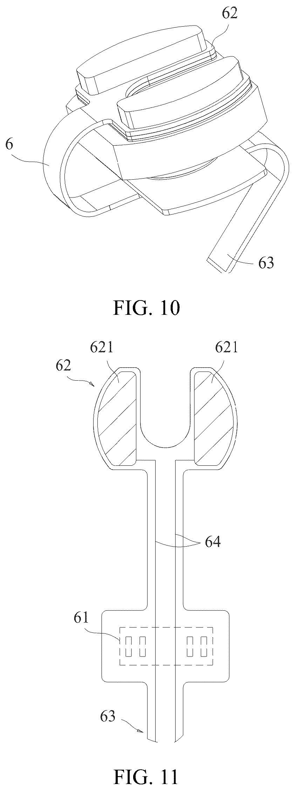

A first end 62 of the sensor FPC 6 is bent to one side that faces the electrical connection portions of the two electrodes, and may be disposed on a support member 4. FIG. 11 is a diagram of a flat state of the sensor FPC shown in FIG. 9.

As shown in FIG. 11, the first end 62 includes two electrical connection ports 621, and the two electrical connection ports 621 correspond to the first electrical connection portion 211 of the first electrode 21 and the second electrical connection portion 221 of the second electrode 22 respectively. The first electrical connection portion 211 is connected to the corresponding electrical connection port on the first end 62 through first conductive foam 31. The second electrical connection portion 221 is connected to the corresponding electrical connection port on the first end 62 through second conductive foam 32.

The electrical connection port 621 may be exposed copper on a surface of the sensor FPC 6. The conductive foam may be bonded to corresponding exposed copper on a surface using a conductive adhesive, to form a reliable electrical connection based on a relatively large contact area. After assembly is completed, the first electrical connection portion 211 and the second electrical connection portion 221 of the two electrodes abut against and are electrically connected to the first conductive foam 31 and the second conductive foam 32 respectively, and an electrical connection path is formed through conducting wires 64 in a substrate of the sensor FPC 6.

In another specific implementation, the electrical connection port may alternatively be a pad structure disposed on the sensor FPC 6, and an electrical connection can also be implemented through the sensor FPC 6. This is not limited in embodiments of this application.

As shown again in FIG. 9, the support member 4 includes a force-transmitting concave portion 41 and an abutting portion 42. The force-transmitting concave portion 41 is opposite to the force-transmitting convex portion 233 of the stylus cap assembly. The force-transmitting convex portion 233 may be partially inserted into the force-transmitting concave portion 41 of the support member 4 and abut against the force-transmitting concave portion 41, to transmit a pressing force through the support member 4. As an example but not limitation, contact surfaces of the force-transmitting concave portion 41 and the force-transmitting convex portion 233 may be fastened to each other using an adhesive. In another possible implementation, the force-transmitting convex portion and the force-transmitting concave portion that abut against and are adapted to each other may alternatively be provided reversely on the stylus cap assembly and the support member. In other words, the force-transmitting concave portion is provided on a stylus cap assembly side, and the force-transmitting convex portion is provided on the support member side (not shown in the figure). This can also ensure both good assembly positioning and pressing force transmission.

The abutting portion 42 is located on the other side that is of the support member 4 and that is away from the force-transmitting concave portion 41, and may abut against a force-bearing surface 51 of a deformation bearing plate 5. Herein, the abutting portion 42 on the support member 4 may be a structure protruding from a body of the support member 4, or may be an outer surface of the body of the support member 4. In other words, the abutting portion 42 may not protrude from the body of the support member 4.

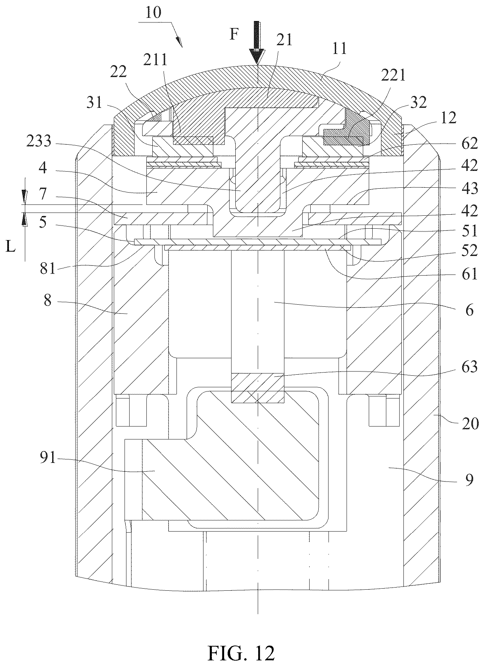

In this implementation, the deformation bearing plate 5 is fastened to the stylus tail support 8, and the pressure sensor 61 of the sensor FPC 6 is attached and fastened to a detection surface 52 of the deformation bearing plate 5. FIG. 12 is a sectional view of the stylus tail module shown in FIG. 3, and the sectional view is formed at an A-A section position shown in FIG. 3.

As shown in FIG. 12, an action force F applied to the stylus tail may be sequentially transmitted through the stylus cap 1, the electrode assembly 2, and the support member 4 to the deformation bearing plate 5. The pressure sensor 61 attached to the detection surface 52 of the deformation bearing plate 5 may detect pressure from a user operation. In this way, the button function or the eraser function is implemented according to an operation instruction. The button function and the eraser function share a pressure-sensing component, so that design space can be saved and costs can be properly controlled.

In a specific implementation, the pressure sensor 61 may be a full-bridge circuit formed by four resistance strain gauges disposed in the sensor FPC 6 shown in FIG. 11. During operation, the full-bridge circuit may convert deformation of the deformation bearing plate 5 into an electrical signal, for example, but not limited to, a voltage signal. When a pressing force is input at the stylus tail, a detection voltage may be obtained through the full-bridge circuit. Specifically, within a strength range of the deformation bearing plate 5, a greater pressing force indicates greater deformation of the deformation bearing plate 5 and a larger value of an electrical signal obtained through detection. A specific function may be implemented using the conventional technologies, and details are not described herein.

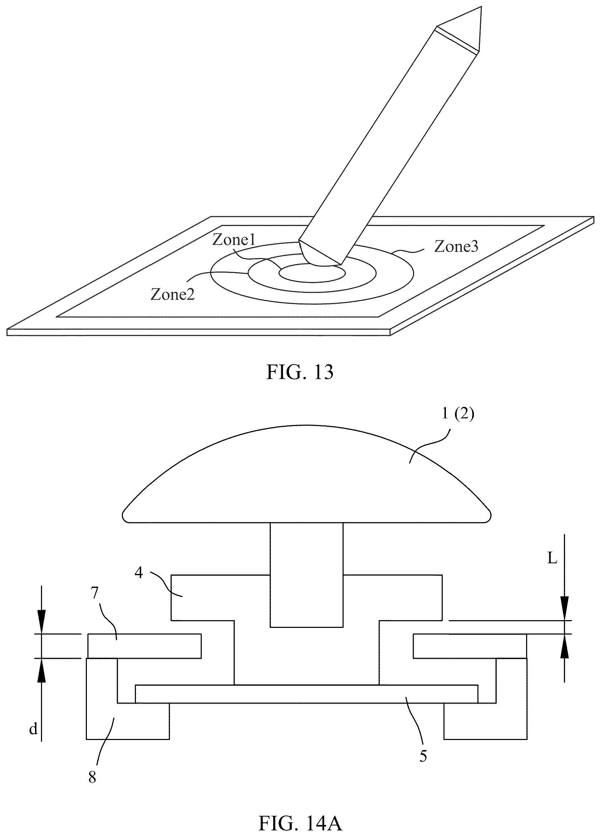

For example, when the pressing force is increased, an erasing region may gradually expand. As shown in FIG. 13, three erasing regions are used as an example to illustrate a gradual trend of the erasing region. As the pressing force is gradually increased, the formed erasing region gradually changes according to a trend of Zone1 -> Zone2 -> Zone3, and a width of an erasing trace gradually increases. Conversely, as the pressing force is gradually decreased, the formed erasing region gradually changes according to a trend of Zone3 -> Zone2 -> Zone1, and the width of the erasing trace gradually decreases.

For another example, as the pressing force is increased, transparency of the erasing trace may also gradually increase; and as the pressing force is decreased, the transparency of the erasing trace gradually decreases.

In addition, the pressure sensor 61 configured to use a magnitude of the pressing force applied to the stylus tail is not limited to using the resistance strain gauge structure shown in the figure. In a specific implementation, the pressure sensor may be configured to: collect pressure data of the stylus tail of the stylus 100, and then transmit the pressure data to a control unit. The pressure data may include but is not limited to a pressure value, which may be specifically selected according to an overall design requirement of a product.

In addition, the deformation bearing plate 5 may be a steel plate, featuring relatively high bearing strength and featuring excellent fatigue resistance due to deformation recovery capability of the steel plate structure. In another possible implementation, a deformation bearing plate 5 of another material may be selected according to an overall configuration requirement of a product. Details are not described herein.

In a specific implementation, the deformation bearing plate 5 may be fastened to the stylus tail support 8 at two ends, so that deformation can be generated based on a pressing force acting on the force-bearing surface 51 of the deformation bearing plate 5. Certainly, in another specific implementation, the deformation bearing plate 5 may alternatively be fastened to the stylus tail support 8 at a single end. In this case, deformation can also be generated when a force is applied to the stylus tail. This is not limited in embodiments of this application.

As shown in the figure, the detection surface 52 is another surface that is of the deformation bearing plate 5 and that is opposite to the force-bearing surface 51. In this case, space in a length direction of the stylus barrel is fully utilized to arrange the pressure sensor 61, so that integration is high. In another possible implementation, the detection surface 52 and the force-bearing surface 51 may alternatively be surfaces on a same side of the deformation bearing plate 5 (not shown in the figure).

To further improve module assembly processability, optionally, a positioning pair may be configured between the electrode assembly 2 and the support member 4. As shown again in FIG. 8 and FIG. 9, the force-transmitting convex portion 233 on the electrode assembly 2 side is provided with a positioning member 2331 extending to a side, and correspondingly, a side wall of the force-transmitting concave portion 41 extends to the side to form a positioning slot 411. During assembly, the positioning member 2331 on the electrode assembly 2 side may be partially placed in the positioning slot 411 of the support member 4, forming a positioning pair to meet an assembly requirement. Such a configuration can avoid an error in assembly of the electrical connection portions of the two electrodes, providing a foolproof function.

A second end 63 of the sensor FPC 6 is configured to connect to a control unit 91 in the stylus barrel 20, as shown in FIG. 12, to establish corresponding signal transmission and power transmission. In a specific implementation, as shown in FIG. 11, a part of the sensor FPC 6 from the pressure sensor 61 to the second end 63 may extend from a cavity in the middle of the stylus tail support 8 to the control unit 91 side.

In another possible implementation, the first electrode 21, the pressure sensor 61, and the control unit 91 may alternatively be electrically connected through a conducting wire (not shown in the figure), and the second electrode 22, the pressure sensor 61, and the control unit 91 may alternatively be electrically connected through a conducting wire (not shown in the figure), which are not limited to the form of the sensor FPC integrating the function of the conducting wire.

Herein, the stylus tail support 8 may be fastened to another fastening member in the stylus barrel 20, to implement assembly of the stylus tail module. As an example but not limitation, an inner end of the stylus tail support 8 and a stylus core 9 in the stylus barrel 20 are fastened to each other through insertion or buckling. In another specific implementation, the stylus tail support 8 may alternatively be fastened to the inner wall of the stylus barrel 20 via an outer peripheral surface, for example, but not limited to, through bonding. This is not limited in embodiments of this application.

To avoid damage to an internal structure of the module caused by an excessive force, optionally, the stylus tail module provided in this implementation may further include a limiting baffle. As shown in FIG. 9 and FIG. 12, compared with the deformation bearing plate 5, the limiting baffle 7 is close to the support member 4. The limiting baffle 7 shown in the figures is fastened to an end of the stylus tail support 8. As an example but not limitation, two ends of the limiting baffle 7 may be bonded and fastened to the stylus tail support 8. The deformation bearing plate 5 is fastened to an inner cavity of the stylus tail support 8. As an example but not limitation, two ends of the deformation bearing plate 5 may also be bonded and fastened to the stylus tail support 8. In addition, the support member 4 includes a limiting surface 43. The limiting surface 43 is located on the side that is of the support member 4 and that faces the limiting baffle 7. In a pressing direction of the stylus cap assembly, there is a spacing L between the limiting surface 43 of the support member 4 and the limiting baffle 7.

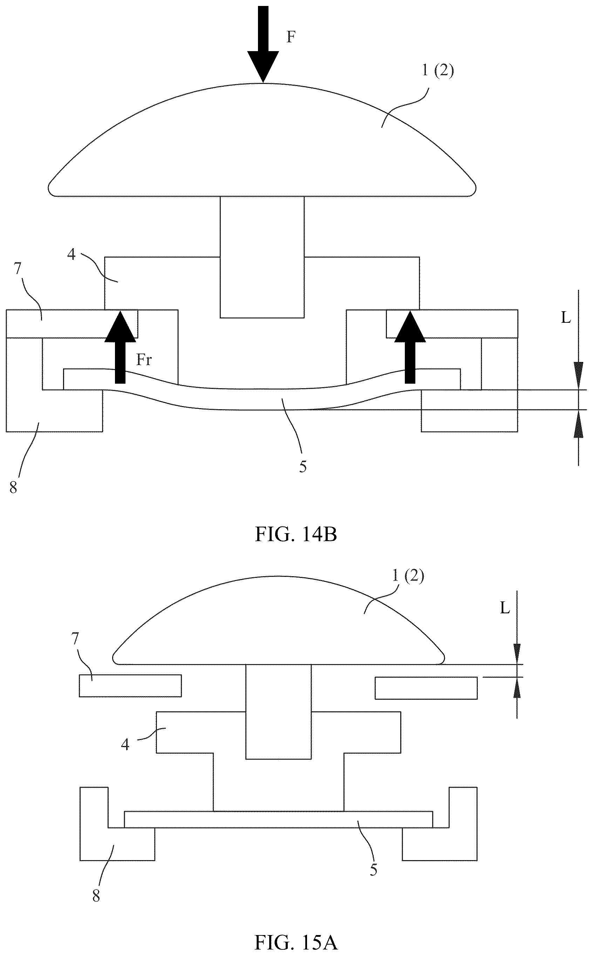

It should be understood that the limiting surface 43 may be a flat surface shown in the figure or may be in a form of non-flat surface, provided that a constraining and limiting relationship can be established between the limiting surface 43 and the limiting baffle in the pressing direction of the stylus cap assembly to limit a pressing stroke of the stylus cap assembly. Refer to FIG. 14A and FIG. 14B together. FIG. 14A is a simplified diagram of a position relationship between the limiting baffle in an initial state, the support member, and the deformation bearing plate. FIG. 14B is a simplified diagram of a position relationship in which the support member is pressed against the limiting baffle.

As the pressing force F at the stylus tail is gradually increased, the spacing L decreases accordingly until the limiting surface 43 of the support member 4 is pressed against the limiting baffle 7. As shown in FIG. 14B, after the limiting surface 43 is pressed against the limiting baffle 7, a generated reaction force Fr may offset a part of the pressing force F, ensuring that the deformation bearing plate 5 is not crushed. A maximum displacement of the deformation bearing plate 5 is L, which is approximately equal to the spacing between the limiting surface 43 and the limiting baffle 7. This can protect an operating state of the pressure sensor 61.

Optionally, within an allowable range of the pressure sensor 61, the pressing stroke of the stylus cap assembly can be properly controlled by adjusting a thickness d of the limiting baffle 7, to constrain the pressing force on the button at the stylus tail. In other words, potential impact of an excessive operating force can be properly controlled through blocking and limiting by the limiting baffle 7.

As shown in FIG. 9, in a specific implementation, an avoidance opening 71 is provided on the limiting baffle 7, so that the abutting portion 42 of the support member 4 can abut against the deformation bearing plate 5 through the avoidance opening 71. As shown in FIG. 12, a mounting step surface 81 may be provided on an inner wall of the stylus tail support 8, and the deformation bearing plate 5 is fastened to the mounting step surface 81. Certainly, in another possible implementation, the deformation bearing plate 5 may be fastened to the stylus tail support 8 using another structural form, provided that reliable fastening can be implemented.

It should be noted that, as a limiting portion for limiting the pressing stroke of the stylus cap assembly, the limiting baffle may be arranged at different positions while still performing a blocking and limiting function.

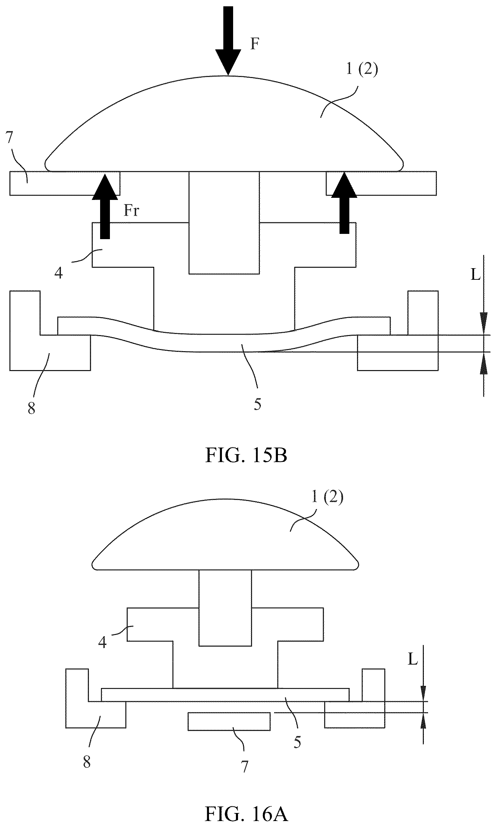

In a possible implementation, as shown in FIG. 15A and FIG. 15B, the limiting baffle 7 may be arranged opposite to the stylus cap 1 to which the electrode assembly 2 is mounted. FIG. 15A is a simplified diagram of a position relationship of another limiting baffle in an initial state. In the pressing direction of the stylus cap assembly, there is a spacing L between the limiting baffle 7 and a limiting surface of the stylus cap assembly. Herein, the limiting baffle may be fastened to the stylus tail support 8, or may be fastened to an inner wall surface of the stylus barrel (not shown in the figure). FIG. 15B is a simplified diagram of a position relationship in which the stylus cap 1 to which the electrode assembly is mounted is pressed against the limiting baffle 7. After an inner limiting surface of the stylus cap 1 is pressed against the limiting baffle 7, a generated reaction force Fr may offset a part of a pressing force F. A maximum displacement of the deformation bearing plate 5 is L. This can ensure that the deformation bearing plate 5 is not crushed.

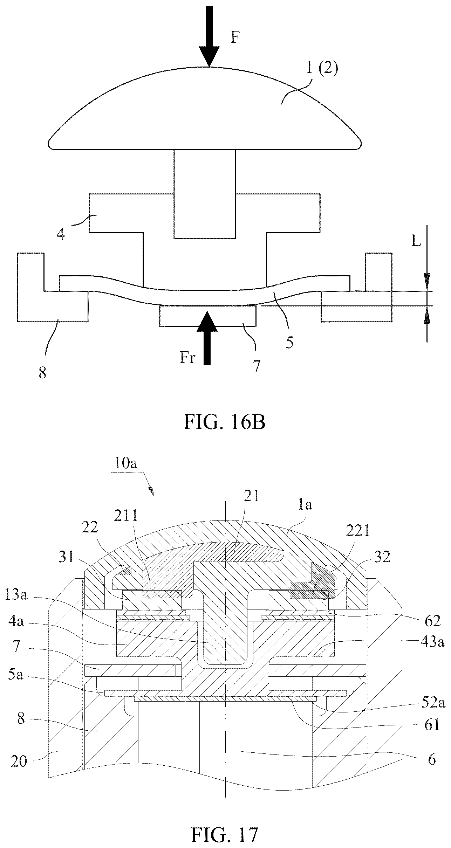

In another possible implementation, as shown in FIG. 16A and FIG. 16B, the limiting baffle 7 may alternatively be arranged opposite to the deformation bearing plate 5. FIG. 16A is a simplified diagram of a position relationship of still another limiting baffle in an initial state. The limiting baffle 7 is located on a side that is of the deformation bearing plate 5 and that is away from the support member 4. In the pressing direction of the stylus cap assembly, there is a spacing L between the limiting baffle 7 and the deformation bearing plate 5. Herein, the limiting baffle may be fastened to the stylus tail support 8 (not shown in the figure). FIG. 16B is a simplified diagram of a position relationship in which the deformation bearing plate 5 is pressed against the limiting baffle 7. After the deformation bearing plate 5 deforms under pressure and is pressed against the limiting baffle 7, a generated reaction force Fr may offset a part of a pressing force F. A maximum displacement of the deformation bearing plate 5 is L. This can ensure that the deformation bearing plate 5 is not crushed.

In the foregoing implementation, the two electrodes are assembled with and fastened to the electrode support 23 to form the electrode assembly 2, and the electrode assembly 2 and the stylus cap 1 are assembled with and fastened to each other, to form the stylus cap assembly. In another specific implementation, the two electrodes and the stylus cap may be formed as a single unit through an injection molding process.

FIG. 17 is a diagram of an assembly relationship of another stylus tail module according to an embodiment of this application. To clearly show a difference and a relationship between this implementation and the embodiment described in FIG. 3, components or structures with a same function are illustrated with a same numeral in the figures.

As shown in FIG. 17, the stylus tail module 10a is located at a tail end of a stylus barrel 20. In this implementation, a first electrode 21, a second electrode 22, and a stylus cap 1a are integrated into a stylus cap assembly through injection molding, and a force-transmitting convex portion 13a is formed through injection molding. In other words, compared with the stylus tail module described in FIG. 3, a stylus cap and an electrode support in this implementation are made of a material for injection molding in this implementation.

In this implementation, a force-transmitting convex portion 11a is arranged opposite to a force-transmitting concave portion 41 of a support member 4, and may be partially inserted into the force-transmitting concave portion 41 of the support member 4 and abut against the force-transmitting concave portion 41, to transmit a pressing force through the support member 4. Both of a first electrical connection portion 211 of the first electrode 21 and a second electrical connection portion 221 of the second electrode 22 extend out of and are exposed from a material for injection molding, abut against and are electrically connected to first conductive foam 31 and second conductive foam 32 respectively, and are connected to corresponding electrical connection ports on a first end 62 through the first conductive foam 31 and the second conductive foam 32 respectively.

In addition, the support member 4a and a deformation bearing plate 5a in this implementation are integrally formed through processing. In other words, the support member 4a and the deformation bearing plate 5a are one part. For ease of description, corresponding numerals are provided in the figure for the support member 4a and the deformation bearing plate 5a respectively. In a specific implementation, the support member 4a and the deformation bearing plate 5a may be made of steel, and two ends of the deformation bearing plate 5a may be welded on a stylus tail support 8. This can effectively improve overall structural strength of a stylus tail.

Similarly, the pressure sensor 61 of the sensor FPC 6 is attached and fastened to a detection surface 52a of the deformation bearing plate 5a. In this case, an action force applied to the stylus tail may be sequentially transmitted through the stylus cap 1a and an electrode assembly 2 to the support member 4a and the deformation bearing plate 5a that are formed as a single unit. The pressure sensor 61 attached to the detection surface 52a of the deformation bearing plate 5a may detect pressure from a user operation, to implement a corresponding function according to a corresponding operation instruction. In addition, there is a spacing L between a limiting surface 43a of the support member 4a and the limiting baffle 7, for constructing a limiting constraint for a pressing stroke.

Other components and connection relationships may be implemented in a same manner as those in the implementation described in FIG. 3, and details are not described herein again.

In the implementations described in FIG. 3 and FIG. 17, both of the limiting portions for constraining and limiting a pressing stroke are in a structural form of the limiting baffle, and are constructed based on the support member. In another implementation, constraining and limiting of the pressing stroke may alternatively be constructed based on the deformation bearing plate.

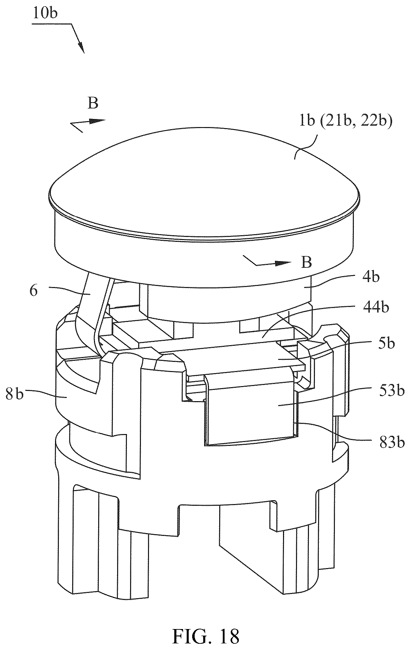

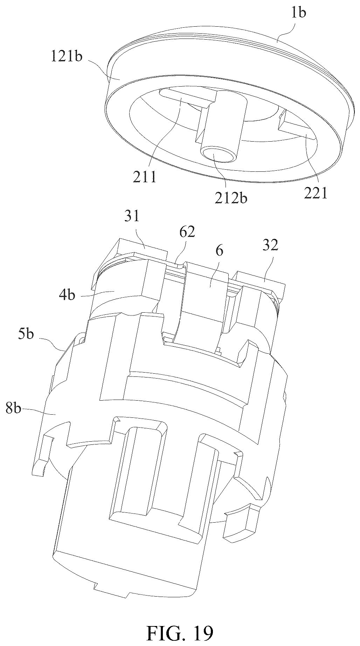

Refer to FIG. 18 and FIG. 19. FIG. 18 is a diagram of overall composition of still another stylus tail module according to an embodiment of this application. FIG. 19 is a diagram of an assembly relationship of the stylus tail module shown in FIG. 18. To clearly show differences and relationships between this implementation and the embodiments described in FIG. 3 and FIG. 17, components or structures with a same function are illustrated with a same numeral in the figures.

As shown in FIG. 18, a stylus cap assembly of the stylus tail module 10b is formed by integrating a stylus cap 1b, a first electrode 21b, and a second electrode 22b into a single unit through injection molding. Herein, an action force applied to a stylus tail may be sequentially transmitted through the stylus cap assembly and a support member 4b to a deformation bearing plate 5b. The deformation bearing plate 5b is fastened to a stylus tail support 8b.

As shown in FIG. 19, both of a first electrical connection portion 211 of the first electrode 21b and a second electrical connection portion 221 of the second electrode 22b extend out of and are exposed from a material for injection molding, abut against and are electrically connected to first conductive foam 31 and second conductive foam 32 respectively, and are connected to corresponding electrical connection ports on a first end 62 through the first conductive foam 31 and the second conductive foam 32 respectively.

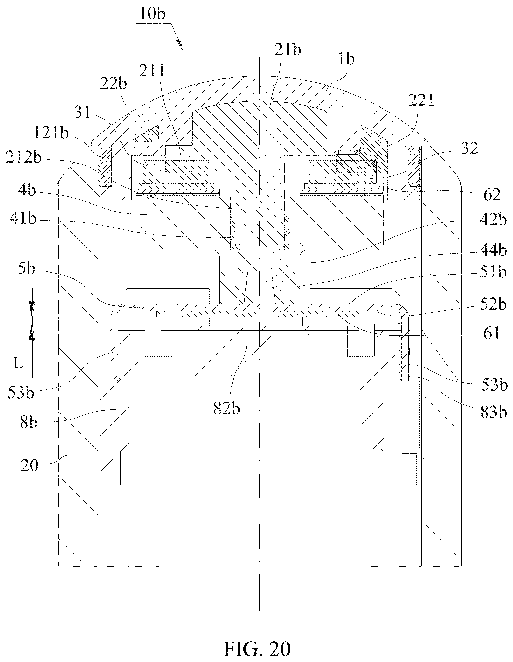

FIG. 20 is a B-B sectional view of the stylus tail module shown in FIG. 18. As shown in FIG. 20, in the stylus tail module 10b located at a tail end of a stylus barrel 20, an outer peripheral surface of a connection portion 12b of the stylus cap 1b is provided with an adhesive slot 121b. When the stylus cap 1b is bonded and fastened to an inner wall of the stylus barrel 20, an adhesive layer in adhesive accommodation space formed by the adhesive slot 121b ensures a secure connection between the stylus cap 1b and the stylus barrel 20.

An abutting portion 42b of the support member 4b is pressed against a force-bearing surface 51b of the deformation bearing plate 5b, and a pressure sensor 61 configured on a sensor FPC 6 is attached and fastened to a detection surface 52b of the deformation bearing plate 5b, to convert deformation of the deformation bearing plate 5a into an electrical signal.

In this implementation, a limiting portion 82b is disposed in the middle of the stylus tail support 8b, and there is a spacing L between the pressure sensor 61 attached to the detection surface 52b of the deformation bearing plate 5b and the limiting portion 82b of the stylus tail support 8b. In other words, an FPC configured with the pressure sensor 61 and the limiting portion 82b are arranged opposite to and are spaced apart from each other. In this case, after the deformation bearing plate 5b deforms under pressure and is pressed against the limiting portion 82b, a generated reaction force may offset a part of a pressing force (refer to FIG. 16B). This ensures that the deformation bearing plate 5b is not crushed.

Certainly, in another possible specific implementation, the limiting portion 82b of the stylus tail support 8b and the detection surface 52b of the deformation bearing plate 5b may alternatively be arranged opposite to and be spaced apart from each other (not shown in the figure), and the detection surface 52b is pressed against the abutting limiting portion 82b, to constrain and limit a pressing stroke.

To improve reliability of a secure connection between the deformation bearing plate 5a and the stylus tail support 8b, optionally, an end of the deformation bearing plate 5b includes a mounting portion 53b formed through bending toward the stylus tail support 8b. As shown in FIG. 18, a corresponding slot 83b is provided on the stylus tail support 8b, and the mounting portion 53b at the end of the deformation bearing plate 5b is inserted into and fastened to the slot 83b. As a result, the mounting portion 53b and the slot 83b that are adapted to each other through insertion can provide assembly positioning, and then be fastened to each other through welding or adhesive bonding. In one aspect, assembly processability is excellent, and product assembly accuracy can be improved. In another aspect, a fixed contact area between the deformation bearing plate 5b and the stylus tail support 8b is increased. As a result, a fastening relationship is effectively strengthened.

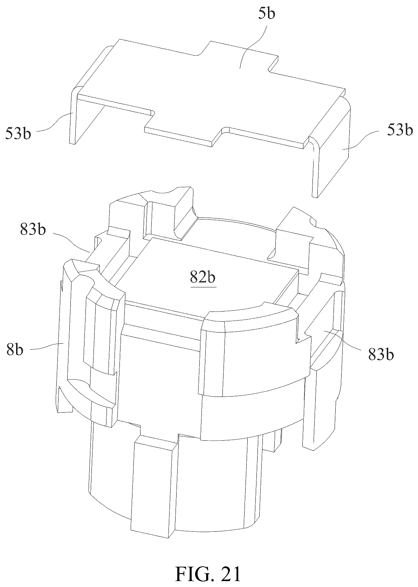

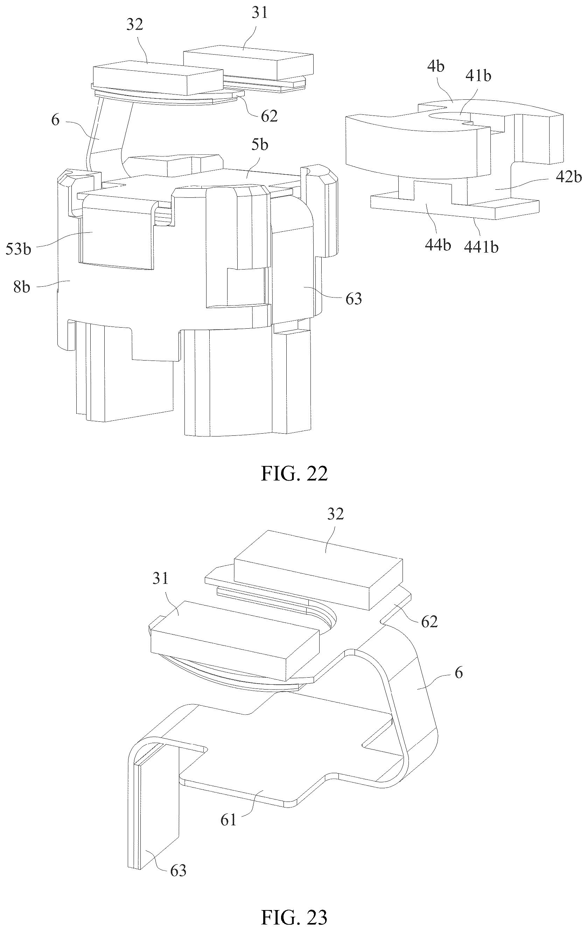

Refer to FIG. 20, FIG. 21, and FIG. 22 together. FIG. 21 is a diagram of an assembly relationship between the deformation bearing plate and the stylus tail support that are shown in FIG. 18. FIG. 22 is a diagram of an assembly relationship between the support member and the sensor FPC that are shown in FIG. 18.

In a specific implementation, as shown in FIG. 21, two ends of the deformation bearing plate 5b may be both provided with mounting portions 53b, which may be respectively inserted into and fastened to corresponding slots 83b provided on the stylus tail support 8b. As a result, an assembly relationship is more stable.

The pressing force applied to the stylus tail acts on the force-bearing surface 51b of the deformation bearing plate 5b through the abutting portion 42b of the support member 4b. To further improve use reliability of the support member 4b, optionally, the abutting portion 42b of the support member 4b is provided with a metal adapter 44b. The metal adapter 44b includes an abutting surface 441b. The abutting surface 441b faces the force-bearing surface 51b of the deformation bearing plate 5b. The abutting surface 441b of the metal adapter 44b acts on the deformation bearing plate 5b to cause deformation. As a result, based on configuration of the metal adapter 44b, a bearing capacity of the support member 4b can be improved. For a stylus tail module integrating a button function and an eraser function, stable use reliability is ensured in a scenario with a high operation frequency.

The metal adapter 44b and a body of the support member 4b may be formed as a single unit through an injection molding process. As an example but not limitation, the body of the support member 4b may be formed through injection molding by using a PC (Polycarbonate, polycarbonate) material.

Refer to FIG. 20, FIG. 22, and FIG. 23 together. FIG. 23 is a diagram of a bending assembly relationship of the sensor FPC shown in FIG. 18. As shown in the figure, a first end 62 of the sensor FPC 6 is bent to a side that faces the electrical connection portions of the two electrodes. The first electrical connection portion 211 is connected to the corresponding electrical connection port on the first end 62 through the first conductive foam 31. The second electrical connection portion 221 is connected to the corresponding electrical connection port on the first end 62 through the second conductive foam 32. A part of the sensor FPC 6 from the pressure sensor 61 to a second end 63 may extend from an exterior of the stylus tail support 8 to a control unit 91 side.

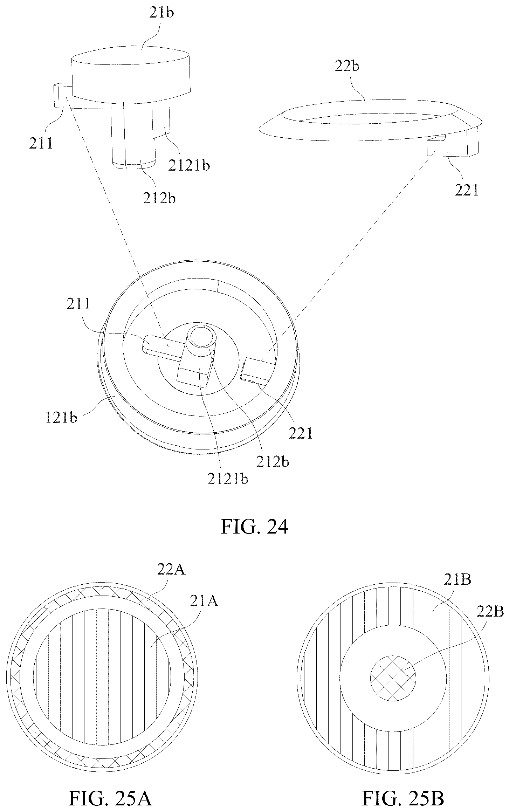

FIG. 24 is a diagram of an assembly relationship of the stylus cap assembly shown in FIG. 18. In this implementation, a force-transmitting convex portion 212b of the stylus cap assembly is provided on the first electrode 21b. Herein, the first electrode 21b, and the force-transmitting convex portion 212b for abutting against the force-transmitting concave portion 41b on the support member 4b are formed as a single unit. An elastic modulus of the first electrode 21b is low. As a result, efficiency of transmitting a pressing force is relatively high. On this basis, a positioning member 2121b for performing a foolproof function is formed by extending from the force-transmitting convex portion 212b to a side. Similarly, the positioning member 2121b and the first electrode 21b are formed as a single unit. During assembly, a positioning member 2331b on the stylus cap assembly side may be partially placed in a positioning slot 411b of the support member 4b, forming a foolproof positioning pair.

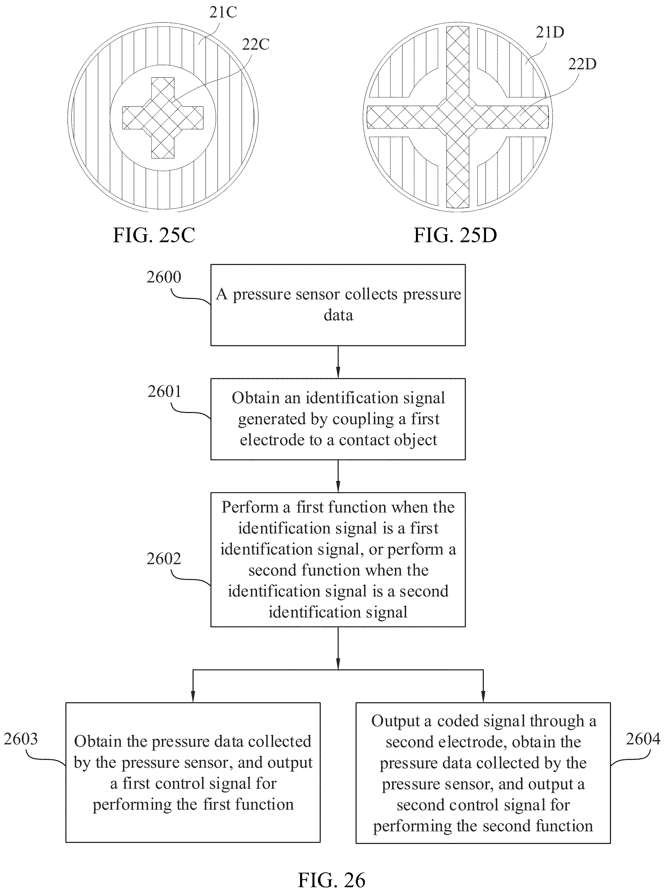

The first electrode and the second electrode that are configured on the stylus cap assembly may be in different structural forms. Refer to four implementations of the first electrode and the second electrode that are of different structures shown in FIG. 25. Structures indicated by vertical hatching lines in the figures are the body of the first electrode, and structures indicated by cross-hatching lines in the figures are the body of the second electrode.

FIG. 25A is a projection view of a first electrode and a second electrode according to an embodiment of this application. This projection direction is a length direction of the stylus. In a plane perpendicular to a length direction of the stylus tail module, a projection of a body of the first electrode 21A is circular, and a projection of a body of the second electrode 22A is annular and is sleeved on an exterior of the body of the first electrode 21A. It should be understood that the length direction of the stylus tail module herein is consistent with the length direction of the stylus. The body of the first electrode 21A is located on an inner side, and a relatively large electrode area may be configured, to ensure that a strong signal is obtained after the first electrode 21A comes into contact with a contact object. The annular body of the second electrode 22A is sleeved on the exterior of the body of the first electrode 21A, so that coded signal communication across a 360° full circumferential range without a dead angle can be implemented and therefore accuracy of identifying and determining a current erasing position can be improved.

It may be understood that configuration forms of the bodies of the two electrodes shown in FIG. 25A are consistent with those in the implementations described in FIG. 3, FIG. 17, and FIG. 18.

FIG. 25B is a projection view of another first electrode and another second electrode according to an embodiment of this application. In a plane perpendicular to a length direction of the stylus tail module, a projection of a body of the second electrode 22B is circular, and a projection of a body of the first electrode 21B is annular and is sleeved on an exterior of the body of the second electrode 22B.

FIG. 25C is a projection view of still another first electrode and still another second electrode according to an embodiment of this application. In a plane perpendicular to a length direction of the stylus tail module, a projection of a body of the second electrode 22C is cross-shaped, and a projection of a body of the first electrode 21C is annular and is sleeved on an exterior of the body of the second electrode 22C.

FIG. 25D is a projection view of yet another first electrode and yet another second electrode according to an embodiment of this application. In a plane perpendicular to a length direction of the stylus tail module, a projection of a body of the second electrode 22D is cross-shaped, and a projection of a body of the first electrode 21D is four arc segments that are circumferentially spaced apart from each other; and four outward-extending ends of the cross-shaped second electrode 22D each are located between two adjacent arc segments of the body of the first electrode 21D. Certainly, in another possible implementation, the projection of the body of the second electrode 22D may alternatively be another quantity of outward-extending ends radiating from a center, and correspondingly, the projection of the body of the first electrode 21D is another quantity of arc segments that are circumferentially spaced apart from each other; and the outward-extending ends each are located between two adjacent arc segments of the body of the first electrode 21D.

Among the foregoing four electrode configuration structures, in the implementations described in FIG. 25B and FIG. 25C, the second electrode 22B configured to transmit a coded signal is located on an inner side of the annular body of the first electrode 21C, and the coded signal is relatively weak. In the implementation described in FIG. 25D, the four outward-extending ends of the second electrode 22B configured to transmit a coded signal each are located between two adjacent arc segments of the body of the first electrode 21D, so that the coded signal can be enhanced. In the implementation described in FIG. 25A, the annular body of the second electrode 22A is sleeved on the exterior of the body of the first electrode 21A, so that a strong coded signal can be formed across a full circumferential range. This is an optimal design.

In addition, the two electrodes may be made of a metal material. In another implementation, metal film layers may alternatively be coated on surfaces that are of the first electrode and the second electrode and that face the stylus cap, for example, but not limited to, through a metal film plating process, provided that areas and relative positions of the first electrode and the second electrode conform to those shown in the projection views.

Based on the foregoing stylus tail module, an embodiment of this application further provides a method for controlling a stylus. The method may be applied to the scenario shown in FIG. 1. FIG. 26 is a block flowchart of a method for controlling a stylus according to an embodiment of this application. As shown in FIG. 26, the method for controlling the stylus includes the following steps.

Step S2601: When a stylus tail of the stylus approaches or comes into contact with a contact object, obtain an identification signal generated by coupling a first electrode and the contact object.

Different identification signals may be generated by coupling the first electrode to contact objects made of different materials. A finger of a user is used as an example. When the finger approaches or comes into contact with the first electrode 21 of the stylus tail module 10, the finger that performs an operation acts as another plate of a capacitor. The finger and the first electrode 21 are coupled to each other, to form a first capacitor and generate a first capacitance value. A touchscreen of an electronic device is used as an example. When the tail end of the stylus tail module 10 approaches or comes into contact with the touchscreen 201, the tail end of the stylus tail module 10 and the touchscreen 201 are coupled to each other, to form a second capacitor and generate a second capacitance value. Corresponding identification signals are obtained based on the first capacitance value and the second capacitance value.

Step S2602: Perform a first function when the identification signal is a first identification signal, or perform a second function when the identification signal is a second identification signal.

For example, the first function is a button function, and the second function is an eraser function. When a first contact object is a finger of a user, the identification signal may be a first identification signal for performing the button function, and performing the first function may include step 2603. When a second contact object is a touchscreen of an electronic device, the identification signal may be a second identification signal for performing the eraser function, and performing the second function may include step 2604.

Step 2603: When the identification signal is the first identification signal, obtain pressure data collected by a pressure sensor, where the pressure data may be first pressure data; and output, based on the first pressure data, a first control signal for performing the first function. In a specific implementation, the pressure data collected by the pressure sensor is obtained to perform button detection and determining. When the pressure data indicates that a current operation is a button operation, a first control signal for performing the button function is output, that is, a button event is output. The first control signal is used for the electronic device to perform the button function (the first function). When the pressure data does not reach a button operation threshold, the button event is released.

Step 2604: When the identification signal is the first identification signal, output a coded signal through the second electrode; obtain pressure data collected by a pressure sensor, where the pressure data may be second pressure data; and output, based on the second pressure data, a second control signal for performing the second function, that is, output an eraser event, where the second control signal is used for the electronic device to perform the second function (the eraser function). When the pressure data does not reach an eraser operation threshold, the eraser event is released.

Optionally, to avoid a misoperation, step S2600 may be performed before the identification signal generated by coupling the first electrode to the contact object is obtained.

Step S2600: Perform step S2601 on a condition that the pressure sensor collects pressure data. In a specific implementation, before the identification signal generated by coupling the first electrode to the contact object is obtained, the pressure sensor may collect third pressure data; and if the third pressure data satisfies a preset condition, the step of obtaining the identification signal generated by coupling the first electrode to the contact object is performed. In other words, a function of the stylus tail module is enabled on a condition that a pressing force is applied to the stylus tail and a corresponding identification signal is generated through coupling to the contact object. This can avoid triggering the first function or the second function by mistake.

Optionally, to reduce power consumption of a product, the second control signal for performing the second function is output on a condition that the pressure data is greater than a second function triggering threshold. The eraser function is used as an example. When the stylus tail comes into contact with or approaches the touchscreen, the eraser function can be enabled only by applying a great force for erasing, and remains disabled in other scenarios, thereby reducing the power consumption of the product.

In addition to the foregoing stylus tail module, this implementation further provides a stylus including the stylus tail module. In the stylus 100 shown in FIG. 2, the stylus tail module 10 is located at a tail end of the stylus barrel 20. It should be understood that the stylus tip module 30 and other functional components of the stylus 100 may be implemented by a person skilled in the art using the conventional technologies. Therefore, details are not described in this specification.

The stylus provided in this implementation has both a button function and an eraser function, so that user experience can be effectively improved and requirements of various application scenarios can be satisfied. It should be noted that, in addition to the tablet computer described in the foregoing embodiments, the electronic device 200 in embodiments of this application may be a mobile terminal or a fixed terminal with a touchscreen, such as a smartphone, a personal digital assistant (personal digital assistant, PDA), a handheld device with a wireless communication function, a computing device, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), or a wireless terminal in smart home (smart home). A form of the terminal device is not specifically limited in embodiments of this application.

It should be understood that other functions of the electronic device are not core inventive points of this application, and may be implemented by the person skilled in the art using the conventional technologies. Therefore, details are not described in this specification.

The foregoing are merely example implementations of the present invention. It should be noted that a person of ordinary skill in the art may make several improvements and modifications without departing from the principle of the present invention, and the improvements and modifications shall be regarded as falling within the protection scope of the present invention.

## Claims

1. A stylus tail module, configured to adapt to a stylus barrel of a stylus, wherein the stylus tail module comprises an elastic stylus cap, a first electrode, and a second electrode;
the stylus cap is configured to be fastened to the stylus barrel, the first electrode and the second electrode are spaced apart from each other on the stylus cap, and the first electrode, the second electrode, and the stylus cap form a stylus cap assembly;
the first electrode is configured to be coupled to a contact object to generate an identification signal; when the contact object is a first contact object, the identification signal is a first identification signal for performing a first function, or when the contact object is a second contact object, the identification signal is a second identification signal for performing a second function; the first contact object and the second contact object are made of different materials; and the first identification signal and the second identification signal are different; and
the second electrode is configured to transmit a coded signal.

2. The stylus tail module according to claim 1, wherein the stylus tail module further comprises a pressure sensor and a stylus tail support, and the pressure sensor is fastened to the stylus tail support and is configured to detect pressure applied to the stylus tail module.

3. The stylus tail module according to claim 2, wherein the stylus tail module further comprises a sensor FPC, the pressure sensor is integrated into the sensor FPC, the sensor FPC comprises a first end and a second end, a first electrical connection portion of the first electrode and a second electrical connection portion of the second electrode each are electrically connected to an electrical connection port on the first end of the sensor FPC, the electrical connection port on the first end and the pressure sensor each are connected to the second end through a conducting wire in a substrate of the sensor FPC, and an electrical connection port on the second end of the sensor FPC is configured to electrically connect to a control unit of the stylus.

4. The stylus tail module according to claim 3, wherein the electrical connection port on the first end is exposed copper on a surface of the sensor FPC.

5. The stylus tail module according to claim 3 or 4, wherein the stylus tail module further comprises a support member and a deformation bearing plate, the deformation bearing plate is fastened to the stylus tail support, the pressure sensor is located on the deformation bearing plate, the support member is located between the stylus cap assembly and the deformation bearing plate, and the support member abuts against the stylus cap assembly and the deformation bearing plate separately.

6. The stylus tail module according to claim 5, wherein one of the stylus cap assembly and the support member is provided with a force-transmitting convex portion, the other of the stylus cap assembly and the support member is provided with a force-transmitting concave portion, and the force-transmitting convex portion is capable of being partially inserted into the force-transmitting concave portion and abutting against the force-transmitting concave portion.

7. The stylus tail module according to claim 6, wherein the force-transmitting convex portion is provided on the stylus cap assembly, and the first electrical connection portion of the first electrode and the second electrical connection portion of the second electrode are located on two sides of the force-transmitting convex portion respectively.

8. The stylus tail module according to any one of claims 5 to 7, wherein two ends of the deformation bearing plate comprise a mounting portion formed through bending toward the stylus tail support, the stylus tail support is provided with a slot, and the mounting portion is inserted into and fastened to the slot.

9. The stylus tail module according to any one of claims 5 to 8, wherein the support member comprises an abutting portion that abuts against the deformation bearing plate, the abutting portion is provided with a metal adapter, and the metal adapter comprises an abutting surface that faces a force-bearing surface of the deformation bearing plate.

10. The stylus tail module according to claim 9, wherein the metal adapter and a body of the support member are formed through an injection molding process.

11. The stylus tail module according to any one of claims 5 to 7, wherein the support member and the deformation bearing plate are integrally formed through processing.

12. The stylus tail module according to any one of claims 5 to 11, wherein the first end of the sensor FPC is bent to a side that is of the support member and that faces the first electrode and the second electrode, and the first electrical connection portion of the first electrode and the second electrical connection portion of the second electrode each are electrically connected to corresponding exposed copper on a surface of the first end of the sensor FPC through conductive foam.

13. The stylus tail module according to any one of claims 5 to 12, further comprising a limiting portion, wherein the limiting portion is capable of limiting a pressing stroke of the stylus cap assembly.

14. The stylus tail module according to claim 13, wherein the limiting portion is a fastened limiting baffle, the support member comprises a limiting surface, and in a pressing direction of the stylus cap assembly, there is a spacing between the limiting surface of the support member and the limiting baffle.

15. The stylus tail module according to claim 13, wherein the limiting portion is a fastened limiting baffle, the stylus cap assembly comprises a limiting surface, and in a pressing direction of the stylus cap assembly, there is a spacing between the limiting surface of the stylus cap assembly and the limiting baffle.

16. The stylus tail module according to claim 13, wherein the limiting portion is disposed in the middle of the stylus tail support, and in a pressing direction of the stylus cap assembly, there is a spacing between the limiting portion and the deformation bearing plate or there is a spacing between the limiting portion and the pressure sensor.

17. The stylus tail module according to any one of claims 1 to 16, wherein the stylus cap assembly further comprises an electrode support, the first electrode and the second electrode are mounted on the electrode support, and the force-transmitting convex portion of the stylus cap assembly is formed on the electrode support.

18. The stylus tail module according to claim 17, wherein a body of the first electrode and a body of the second electrode are located on a side that is of the electrode support and that faces the stylus cap, and both the first electrical connection portion of the first electrode and the second electrical connection portion of the second electrode extend out of the electrode support.

19. The stylus tail module according to claim 17 or 18, wherein the first electrode, the second electrode, and the electrode support are formed through an injection molding process.

20. The stylus tail module according to any one of claims 1 to 16, wherein the first electrode, the second electrode, and the stylus cap of the stylus cap assembly are formed through an injection molding process.

21. The stylus tail module according to claim 20, wherein the force-transmitting convex portion of the stylus cap assembly is formed on the first electrode or the second electrode.

22. The stylus tail module according to any one of claims 17 to 21, wherein in a plane perpendicular to a length direction of the stylus tail module, a projection of the body of the first electrode is circular, and a projection of the body of the second electrode is annular and is sleeved on an exterior of the body of the first electrode.

23. The stylus tail module according to any one of claims 17 to 21, wherein in a plane perpendicular to a length direction of the stylus tail module, a projection of the body of the second electrode is circular, and a projection of the body of the first electrode is annular and is sleeved on an exterior of the body of the second electrode.

24. The stylus tail module according to any one of claims 17 to 21, wherein in a plane perpendicular to a length direction of the stylus tail module, a projection of the body of the second electrode is cross-shaped, and a projection of the body of the first electrode is annular and is sleeved on an exterior of the body of the second electrode.

25. The stylus tail module according to any one of claims 17 to 21, wherein in a plane perpendicular to a length direction of the stylus tail module, a projection of the body of the second electrode is cross-shaped, and a projection of the body of the first electrode is four arc segments that are circumferentially spaced apart from each other; and four outward-extending ends of the second electrode each are located between two adjacent arc segments of the body of the first electrode.

26. The stylus tail module according to any one of claims 1 to 25, wherein the stylus cap comprises a pressing portion and a connection portion, the pressing portion is located in the middle of the stylus cap, the connection portion is located on a periphery of the stylus cap, and an outer peripheral surface of the connection portion is provided with an adhesive slot.

27. A stylus, comprising a stylus barrel and the stylus tail module according to any one of claims 1 to 26, wherein the stylus tail module is fastened at a tail of the stylus barrel, and the stylus cap of the stylus tail module is fastened to the stylus barrel.

28. The stylus according to claim 27, wherein the stylus barrel is of a hollow structure, and the stylus cap is fastened to an inner wall of the stylus barrel through adhesive bonding.

29. A touch system, comprising: an electronic device with a touchscreen, and a stylus adapted to the electronic device, wherein the stylus is the stylus according to claim 27 or 28.

30. A method for controlling a stylus, wherein the stylus comprises the stylus tail module according to any one of claims 1 to 26, and the method for controlling the stylus comprises the following steps:
obtaining an identification signal generated by coupling the first electrode to a contact object;
and
performing a first function when the identification signal is a first identification signal, or performing a second function when the identification signal is a second identification signal.

31. The method for controlling the stylus according to claim 30, wherein performing the first function comprises: obtaining first pressure data collected by the pressure sensor, and outputting, based on the first pressure data, a first control signal for performing the first function.

32. The method for controlling the stylus according to claim 31, wherein performing the second function comprises: outputting a coded signal through the second electrode, obtaining second pressure data collected by the pressure sensor, and outputting, based on the second pressure data, a second control signal for performing the second function.

33. The method for controlling the stylus according to claim 31 or 32, wherein before the identification signal generated by coupling the first electrode to the contact object is obtained, the pressure sensor collects third pressure data; and
if the third pressure data satisfies a preset condition, the step of obtaining the identification signal generated by coupling the first electrode to the contact object is performed.
